(19) Europäisches Patentamt
European Patent Office
Office européen des brevets

(11) Numéro de publication : 0 291 367 B1

(12) # FASCICULE DE BREVET EUROPEEN

(45) Date de publication du fascicule du brevet : 31.07.91 Bulletin 91/31

(51) Int. Cl.[5] : C08F 210/00, C08F 222/00, C08F 220/28, C10L 1/22

(21) Numéro de dépôt : 88400696.6

(22) Date de dépôt : 23.03.88

(54) **Copolymères azotés, leur préparation et leur utilisation comme additifs pour améliorer les propriétés d'écoulement des distillats moyens d'hydrocarbures.**

(30) Priorité : 01.04.87 FR 8704602

(43) Date de publication de la demande : 17.11.88 Bulletin 88/46

(45) Mention de la délivrance du brevet : 31.07.91 Bulletin 91/31

(84) Etats contractants désignés : BE CH DE ES GB IT LI NL SE

(56) Documents cités : EP-A- 0 100 248

(73) Titulaire : INSTITUT FRANCAIS DU PETROLE
4, Avenue de Bois-Préau
F-92502 Rueil-Malmaison (FR)
Titulaire : ELF FRANCE, Société Anonyme dite:
Tour Elf 2 place de la Coupole La Défense 6
F-92400 Courbevoie (FR)

(72) Inventeur : Denis, Jacques
Les Chênes 18, Chemin Grandes Bruyères
F-69260 Charbonnière Les Bains (FR)
Inventeur : Sillion, Bernard
93, rue Juliot Curie
F-69005 Lyon (FR)
Inventeur : Damin, Bernard
162, Grande Rue
F-69600 Oullins (FR)
Inventeur : Leger, Robert
rue Pierre Semard 5, résidence Cazardes
F-69520 Grigny (FR)

(74) Mandataire : Colas des Francs, Jean
Institut Français du Pétrole 4, Avenue de Bois Préau
F-92502 Rueil-Malmaison (FR)

EP 0 291 367 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des copolymères azotés utilisables notamment comme additifs pour améliorer les propriétés d'écoulement à basse température des distillats moyens d'hydrocarbures. Elle concerne également les compositions de distillats moyens d'hydrocarbures (fuel-oils et gazoles) contenant de tels copolymères.

Les distillats de pétrole concernés par l'invention consistent en des distillats moyens (fuel-oils et gazoles) dont l'intervalle de distillation (norme ASTM D86-87) se situe entre 150 et 450°C. Les gazoles considérés plus particulièrement ont un intervalle de distillation allant d'une température initiale de 160°C à 190°C à une température finale de 360°C à 430°C.

Il existe sur le marché un grand nombre de produits préconisés pour améliorer en particulier le point d'écoulement des coupes pétrolières riches en paraffines, tels que par exemple :

— les polymères à base d'oléfines à longue chaîne,
— les copolymères éthylène-acétate de vinyle,
— les N-acylaminoéthylesters de polymères contenant des acides, ou encore : des composés halocarbonés.

Par ailleurs, le document US-A-4359325 décrit des terpolymères de masse moléculaire moyenne 500 à 250000 formés de 10 à 94% en moles d'unités dérivant d'esters acryliques ou méthacryliques, de 3 à 65% en moles d'unités dérivant de composés dicarboxyliques (anhydride, diacide, amide, ester ou imide N-substitué) et 3 à 40% en moles d'unités dérivant de diisobutylène. Les unités dicarboxyliques peuvent avoir été modifiées plus particulièrement par condensation de composés tels que la diméthylaminopropylamine, la triéthylènetétramine, la tétraéthylènepentamine, l'amino-2- pyridine, la N,N-diéthyléthanolamine, la diéthanolamine, la cyano-1 guanidine, le triméthylolpropane, le glycérol et le pentaérythritol. Ces terpolymères, additionnés à diverses huiles hydrocarbonées, par exemple à raison de 0,005 à 2% en poids, en améliorent le point d'écoulement.

La demande de brevet EP-A-100248 décrit des additifs utilisables notamment pour abaisser le point de trouble des distillats moyens d'hydrocarbures, définis comme des produits polymériques de masse moléculaire moyenne en nombre d'environ 1000 à 10000 résultant de la condensation d'un ou plusieurs composés à fonction amine primaire sur un copolymère comprenant :

— (A) des motifs provenant d'au moins une alpha oléfine linéaire,
— (B) des motifs dérivant d'au moins un composé alpha,bêta-dicarboxylique insaturé, sous forme de diacide, diester d'alkyle léger ou d'anhydride ; et
— (C) des motifs provenant d'au moins un ester d'alkyle d'acide monocarboxylique insaturé.

Les additifs décrits dans cette demande de brevet ont également un effet modéré d'abaissement du point découlement des distillats moyens.

La demande de brevet FR-A-2528667 décrit des additifs utilisables pour modifier les propriétés des distillats moyens, et en particulier pour abaisser le point de trouble desdits distillats et en abaisser très légèrement le point d'écoulement.

Ces additifs sont décrits comme les produits de condensation, d'au moins un composé renfermant une fonction amine primaire, en particulier des monoamines aliphatiques primaires et linéaires de 12 à 24 atomes de carbone, des polyamines comportant un radical alkyle linéaire de 12 à 24 atomes de carbone dans leur molécule, des éther-amines dont le groupe éther comporte un radical alkyle linéaire de 12 à 24 atomes ou un alpha-oméga amino-alcool primaire de 10 à 18 atomes de carbone, sur un copolymère comprenant :

— (A) des motifs provenant d'au moins un ester d'alkyle d'acide monocarboxylique insaturé et/ou au moins un ester de vinyle d'acide monocarboxylique saturé ;
— (B) des motifs provenant du diisobutylène ;
— (C) des motifs provenant d'au moins un composé alpha, bêta-dicarboxylique insaturé sous forme de diacide, de diester d'alkyle léger ou d'anhydride.

La demande de brevet EP-A-112195 décrit des additifs pour distillats moyens dont l'action essentielle est de ne laisser apparaître les premiers cristaux de paraffines qu'à une température plus basse que celle à laquelle ces cristaux apparaîtraient en l'absence de tels additifs. Ces additifs ont également une faible influence sur le point d'écoulement des distillats moyens. Il sont décrits comme des produits de masse moléculaire moyenne en nombre de 1000 à 10000 résultant de la réaction d'un composé à fonction amine primaire sur un copolymère renfermant de 20 à 40% en moles de motifs (A) provenant d'au moins une alpha oléfine linéaire ; de 30 à 70% en moles de motifs (B) provenant d'au moins un composé alpha, bêta-dicarboxylique insaturé sous forme de diacide, de diester d'alkyle léger ou d'anhydride ;
de 5 à 30% en moles de motifs (C) provenant d'au moins un ester d'alkyle d'acide monocarboxylique insaturé; et
de 5 à 15% en moles de motifs (D) provenant du styrène et/ou d'au moins un de ses dérivés alkylés, halogénés

ou méthoxylés.

On a maintenant découvert que certains composés chimiques, dont une définition est donnée ci-après, ont, lorsqu'ils sont ajoutés aux distillats moyens, une action très importante sur la température d'écoulement de ceux-ci. Cette classe de composés chimiques présente également un effet sur d'autres propriétés des distillats moyens (fuel-oils et gazoles) : en particulier, ils ont la propriété de ne laisser apparaître les premiers cristaux de paraffines qu'à une température plus basse que celle à laquelle ces cristaux apparaîtraient en l'absence de tels additifs.

Lorsque les cristaux de paraffines, dont la formation est provoquée par le refroidissement, sont apparus, leur tendance naturelle est de se rassembler par gravité dans la partie basse. Ce phénomène, généralement connu sous le terme de sédimentation, provoque le bouchage des canalisations et des filtres et est préjudiciable à la bonne utilisation des distillats moyens et notamment des gazoles. Les composés chimiques préconisés dans l'invention peuvent diminuer notablement la vitesse de sédimentation des paraffines formées par refroidissement des gazoles et autres distillats moyens.

Enfin, les produits préconisés pour leurs propriétés mentionnées ci-dessus confèrent en outre aux gazoles et distillats moyens auxquels ils sont ajoutés, des propriétés anti-corrosion sur les surfaces métalliques.

Les propriétés de ces produits, et en particulier leur action sur le point d'écoulement, présentent un intérêt important pour les raffineurs ; en effet, l'incorporation de ces additifs aux distillats moyens, doit pouvoir permettre, sans modification du schéma de distillation, de respecter les spécifications qui évoluent actuellement dans le sens d'une plus grande sévérité.

D'une manière générale, les additifs de l'invention peuvent être définis comme des produits polymériques de masse moléculaire moyenne en nombre d'environ 400 à 50000, comprenant :

— de 5 à 60% en moles de motifs (A) dérivant d'alpha oléfines et répondant à la formule générale :

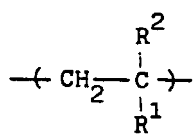

— de 10 à 70% en moles de motifs (B) dérivant de composés dicarboxyliques insaturés et répondant à l'une des formules générales :

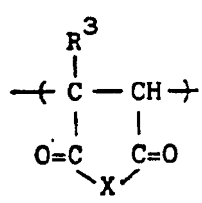

ou

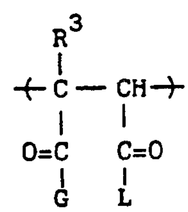

ou

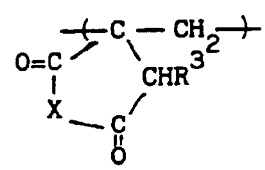

ou

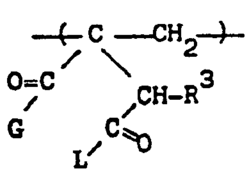

ou

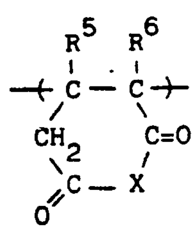

ou

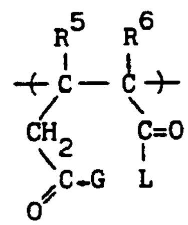

— de 10 à 60% en moles de motifs (C) dérivant d'esters insaturés de diols-1,2 répondant à la formule générale :

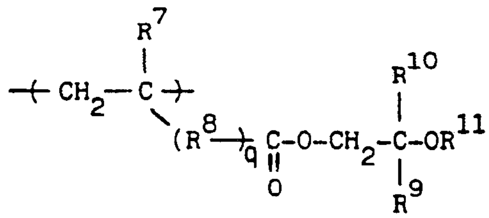

— de 0 à 60% en moles de motifs (D) dérivant de composés acryliques répondant à la formule générale:

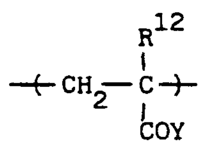

dans lesquelles $R^1$ représente un atome d'hydrogène ou un groupe alkyle inférieur de 1 à 4 atomes de carbone (méthyle, éthyle, propyles ou butyles) ; $R^2$ représente un atome d'hydrogène ou un groupe alkyle de 1 à 30 atomes de carbone ; $R^3$ représente un atome d'hydrogène ou un groupe alkyle inférieur de 1 à 4 atomes de carbone ; G et L, identiques ou différents, représentent chacun un groupe —OH, —$OR^1$ ou —$NHR^4$, où $R^1$ est défini comme précédemment et $R^4$ représente un radical organique monovalent dérivant d'un composé renfermant une fonction amine primaire répondant à l'une des formules générales :

$$R—Z—[(CH_2)_n—NH]_m—H \quad ou \quad HO—R^{14}—NH_2$$

où R représente un radical aliphatique monovalent de 1 à 30 atomes de carbone, Z est choisi parmi l'atome d'oxygène —O— et les groupes —$NR^{15}$— dans lesquels $R^{15}$ représente un atome d'hydrogène ou un radical aliphatique monovalent de 1 à 30 atomes de carbone, n est un nombre entier de 2 à 4, m est zéro lorsque Z est —NH— ou un nombre entier de 1 à 4 dans tous les cas, $R^{14}$ représente un radical aliphatique divalent de 2 à 30 atomes de carbone ; X représente un atome d'oxygène —O— ou un groupe $= N-R^4$, où $R^4$ est défini comme précédemment ; $R^5$ et $R^6$, identiques ou différents, représentent chacun un atome d'hydrogène ou un groupe alkyle inférieur de 1 à 4 atomes de carbone, au moins l'un d'entre eux représentant un atome d'hydrogène ; $R^7$ et $R^{10}$, identiques ou différents, représentent chacun un atome d'hydrogène ou un groupe alkyle inférieur de 1 à 4 atomes de carbone ; $R^8$ représente un radical aliphatique divalent de 1 à 30 atomes de carbone ; q est égal à zéro ou à 1 ; $R^9$ représente un radical aliphatique monovalent de 2 à 30 atomes de carbone ; $R^{11}$ représente un atome d'hydrogène, un groupe alkyle inférieur de 1 à 4 atomes de carbone ou un radical acyle inférieur de 1 à 4 atomes de carbone (formyle, acétyle, propionyle, butyryle ou isobutyryle) ; $R^{12}$ représente un atome d'hydrogène ou un radical inférieur de 1 à 4 atomes de carbone ; et Y est choisi parmi les groups —OH, —$OR^{13}$ et —$NHR^4$, dans lesquels $R^4$ a la définition donnée ci-avant et $R^{13}$ représente un radical alkyle de 1 à 30 atomes de carbone ; l'un au moins des motifs (A), (B), (C) et/ou (D) dudit copolymère comportant au moins 12 atomes de carbone, et de préférence au moins 16 atomes de carbone dans sa formule, et au moins 10% des motifs dudit copolymère étant des motifs (B) de type imide, de formules générales ci-avant dans lesquelles X représente le groupe $= N-R^4$.

Les copolymères de la présente invention sont des copolymères statistiques, c'est-à-dire que la répartition des motifs monomériques le long de la chaîne est aléatoire.

Parmi les copolymères de la présente invention, définis de manière générale ci-avant, on utilise de préférence ceux qui sont constitués des motifs (A), (B), (C) et éventuellement (D) définis de façon plus précise ci-après.

• Les motifs (A) dérivant d'alpha oléfines présents dans le copolymère sont habituellement ceux représentés par la formule ci-avant, dans laquelle $R^1$ représente un atome d'hydrogène ou un groupe méthyle et $R^2$ représente un atome d'hydrogène ou un groupe alkyle de 1 à 28 atomes de carbone ; bien que certaines alpha oléfines ramifiées soient utilisables, on utilise avantageusement des alpha oléfines sensiblement linéaires, c'est-à-dire ne comportant que peu de ramifications et on préfère utiliser des alpha oléfines linéaires ayant de

2 à 30 atomes de carbone et plus particulièrement celles ayant de 12 à 28 atomes de carbone : $R^1$ représente dans la formule ci-avant un atome d'hydrogène et $R^2$ représente un atome d'hydrogène ou un groupe alkyle linéaire de 1 à 28 atomes de carbone et de préférence $R^2$ représente un groupe alkyle linéaire de 10 à 26 de carbone.

On utilise avantageusement des mélanges d'alpha oléfines linéaires de 14 à 21 atomes de carbone, de 18 à 24 atomes de carbone ou de 22 à 30 atomes de carbone.

Comme composés spécifiques, on peut citer : l'éthylène, le propylène, les butènes, l'hexène-1, l'heptène-1, l'octène-1, le diisobutylène, le décène-1, l'undécène-1, le dodécène-1, le tridécène-1, le tétradécène-1, le pentadécène-1, l'hexadécène-1, l'heptadécène-1, l'octadécène-1, le nonadécène-1, l'eicosène-1, l'heneicosène-1, le docosène-1, le tricosène-1, le tétracosène-1, le pentacosène-1, l'hexacosène-1, l'heptacosène-1, l'octacosène-1, le nonacosène-1 et le triacontène-1.

• Les motifs (B) dérivant de composés dicarboxyliques insaturés, sous forme de diacides, de diamides, de diesters d'alkyle inférieur, d'imides ou d'anhydrides, présents dans le copolymère, sont usuellement ceux représentés par les formules ci-avant dans lesquelles $R^3$ représente un atome d'hydrogène ou un groupe méthyle, et $R^5$ et $R^6$ représentent un atome d'hydrogène. Les motifs (B) dérivent de préférence d'un anhydride ou d'un imide, en particulier de l'anhydride maléïque, de l'anhydride citraconique (méthylmaléïque), de l'anhydride itaconique (méthylène maléïque), de l'anhydride glutaconique et des imides N-substitués correspondant à ces anhydrides. De préférence, les motifs (B) dérivent de l'anhydride maléïque et des maléïmides N-substitués. Dans les formules ci-avant, lorsque X représente le groupe = N-$R^4$, les composés à fonction amine primaire dont dérive ce groupe peuvent être choisis parmi les familles de composés ci-après.

1 — Les amines primaires de formule R-$NH^2$ (dans ce cas, dans la formule ci-avant, Z représente le groupement —NH— et la valeur de m est zéro) ; de préférence le radical R est un radical aliphatique monovalent saturé ; très avantageusement le radical R est linéaire et renferme de 10 à 24 atomes de carbone. R-$NH_2$ représente alors une mono-alkylamine primaire et linéaire.

Comme exemples spécifiques de ces amines, on peut citer : la méthylamine, l'éthylamine, la propylamine, la butylamine, la pentylamine, l'hexylamine, la nonylamine, la décylamine, la dodécylamine, la tétradécylamine, l'hexadécylamine, l'octadécylamine, l'eicosylamine et la docosylamine.

2 — Les polyamines de formule

$$R{-}NH{-}\left[(CH_2)_n{-}NH\right]_m{-}H$$

(dans ce cas, dans la formule ci-avant, Z représente le groupement —NH— ; m peut avoir une valeur de 1 à 4 et n une valeur de 2 à 4, de préférence 3) ; de préférence le radical R est saturé ; très avantageusement le radical R est linéaire et renferme de 8 à 24 atomes de carbone.

Comme composés spécifiques, on peut citer les N-alkyldiamino-1,3 propane dans lesquels le groupe alkyle linéaire comporte de 1 à 24 atomes de carbone et de préférence de 7 à 24 atomes de carbone, par exemple le N-dodécyldiamino-1,3 propane, le N-tétradécyldiamino-1,3 propane, le N-hexadécyldiamino-1,3 propane, le N-octadécyldiamino -1,3 propane, le N-eicosyldiamino-1,3 propane et le N-docosyldiamino-1,3 propane ; on peut également citer les N-alkyldipropylène triamines dans lesquelles le groupe alkyle linéaire comporte de 1 à 24 atomes de carbone et par exemple parmi les composés dont le groupe alkyle comporte de 12 à 24 atomes de carbone, la N-hexadécyldipropylène triamine, la N-octadécyldipropylène triamine, la N-éicosyldipropylène triamine et la N-docosyldipropylène triamine.

3 — Les polyamines répondant à la formule :

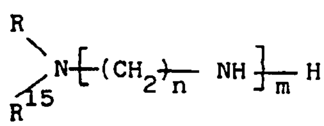

(correspondant à la formule générale ci-avant dans laquelle Z représente —$NR^{15}$—) où R représente un radical alkyle de 1 à 30 atomes de carbone et de préférence de 8 à 24 atomes de carbone et $R^{15}$ représente un radical alkyle de 1 à 30 atomes de carbone et de préférence de 1 à 24 atomes de carbone, R et $R^{15}$ renfermant à eux deux de préférence de 9 à 32 atomes de carbone ; n a une valeur de 2 à 4 et m une valeur de 1 à 4 ; R et $R^{15}$ sont de préférence linéaires.

Comme composés spécifiques, on peut citer le N,N-diéthyl diamino-1,2 éthane, le N,N-diisopropyl diamino-1,2 éthane, le N,N-dibutyl diamino-1,2 éthane, le N,N-diéthyl diamino-1,4 butane, le N,N-diméthyldiamino-1,3 propane, le N,N-diéthyl diamino-1,3 propane, le N,N-dioctyl diamino-1,3 propane, le N,N-didécyl diamino-1,3 propane, le N,N-didodécyl diamino-1,3 propane, le N,N-ditétradécyl diamino-1,3 propane, le N,N-dihexadécyl diamino-1,3 propane, le N,N-dioctadécyl diamino-1,3 propane, la N,N-didodécyldipropylène triamine, la N,N-ditétradécyldipropylène triamine, la N,N-dihexadécyldipropylène triamine, la N,N-dioctadécyldipropylène triamine, le N-méthyl, N-butyl diamino-1,2 éthane, le N-méthyl N-octyl diamino-1,2 éthane, le N-éthyl,N-octyl diamino-1,2 éthane, le N-méthyl, N-décyl diamino-1,2 éthane, le N-méthyl N-dodécyl diamino 1,3 propane, le N-méthyl, N-hexadécyl diamino-1,3 propane et le N-éthyl N-octadécyl diamino-1,3 propane.

4 — Les éther-amines répondant à la formule

$$R - O\left[(CH_2)_n - NH\right]_m H$$

(qui correspond à la formule générale ci-avant où Z représente un atome d'oxygène) ; le radical R est de préférence un radical aliphatique monovalent saturé de 1 à 30 atomes de carbone et de préférence de 8 à 24 atomes de carbone ; R est de préférence linéaire ; n est un nombre entier de 2 à 4, préférentiellement 2 ou 3 et m est un nombre enter de 1 à 4, préférentiellement 1 ou 2.

Parmi les alkyléther-amines, on peut citer comme composés spécifiques : la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'éicosyloxy-3 propylamine, la docosyloxy-3 propylamine, le N-(octyloxy-3 propyl)diamino-1,3 propane, le N-(décyloxy-3 propyl)diamino-1,3 propane, la (triméthyl-2,4,6 décyl)oxy-3 propylamine et le N-(triméthyl-2,4,6 décyl)oxy-3 propyl diamino-1,3 propane.

5 — Les amino-alcools répondant à la formule générale ci-avant dans laquelle $R^{14}$ représente un radical aliphatique, de préférence saturé, divalent, de préférence linéaire, renfermant de 2 à 30 atomes de carbone et de préférence de 8 à 24 atomes de carbone. On utilise de préférence des amino-alcools comportant une fonction alcool primaire et de préférence des alpha-oméga amino-alcools.

Comme exemples spécifiques, on peut citer : la monoéthanolamine, l'amino-1 propanol-3, l'amino-1 butanol-4, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Il doit être entendu qu'il est possible que les motifs (B), dans lesquels X représente le groupe $= N-R^4$, dérivent d'un seul des composés à fonction amine primaire décrit ci-avant ou de plusieurs de ces composés.

Comme exemples spécifiques de mélange de composés à fonction amine primaire, on peut citer : les coupes d'amines grasses primaires dont les chaînes alkyles comportent, en proportions molaires approximatives données dans le tableau ci-après, des chaînes en $C_8$, $C_{10}$, $C_{12}$, $C_{14}$, $C_{16}$, $C_{18}$, $C_{20}$, et $C_{22}$.

| Coupe \ chaines alkyles | $C_8$ | $C_{10}$ | $C_{12}$ | $C_{14}$ | $C_{16}$ | $C_{18}$ | $C_{20}$ | $C_{22}$ |
|---|---|---|---|---|---|---|---|---|
| A | 0 | 0 | 0 | 1% | 28% | 71% | 0 | 0 |
| B | 0 | 0 | 0 | 1% | 5% | 42% | 12% | 40% |
| C | 3% | 6% | 56% | 18% | 10% | 7% | 0 | 0 |

• Les motifs (C) dérivant d'esters insaturés de diol-1,2, présents dans les copolymères, sont usuellement ceux représentés par la formule ci-avant dans laquelle $R^7$ représente un atome d'hydrogène ou un groupe méthyle ; $R^{10}$ représente un atome d'hydrogène ; $R^8$ représente un radical aliphatique divalent saturé, de préférence linéaire, ayant de 1 à 30 atomes de carbone et de préférence de 6 à 24 atomes de carbone et plus particulièrement de 6 à 21 atomes de carbone ; q est égal à zéro ou à 1 ; $R^9$ représente un radical aliphatique monovalent saturé, de préférence linéaire, ayant de 2 à 30 atomes de carbone, de préférence de 6 à 28 atomes de carbone et plus particulièrement de 10 à 26 atomes de carbone ; $R^{11}$ représente un atome d'hydrogène ou un radical acyle inférieur dérivé d'un acide monocarboxylique aliphatique saturé, de préférence linéaire, ayant de 1 à 4 atomes de carbone ; $R^{11}$ représente de préférence un atome d'hydrogène ou un groupe acétyle, les esters préférées étant ceux répondant à l'une au moins des formules générales :

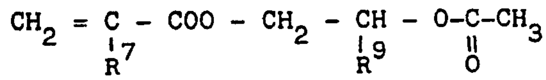 et

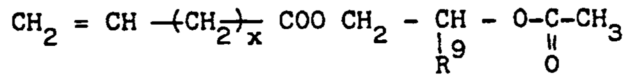

dans ces formules, $R^7$ et $R^9$ ont la signification donnée ci-avant et x est un nombre entier de 6 à 21.

• Les motifs (C) sont de préférence obtenus à partir d'acides monocarboxyliques insaturés ou de dérivés de tels acides que l'on fait réagir sur au moins un époxyde terminal ; le produit résultant étant ensuite éventuellement mis en réaction de manière à transformer en totalité ou en partie le groupe hydroxy en groupe alcoxy ou en groupe acyle, par des méthodes bien connues de l'homme du métier.

Les acides monocarboxyliques insaturés que l'on emploie ont la formule générale suivante :

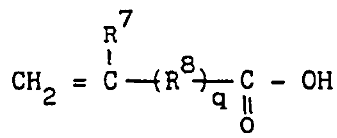

dans laquelle $R^7$, $R^8$ et q ont la définition donnée ci-avant.

Comme composés spécifiques, on peut citer : l'acide acrylique, l'acide méthacrylique, l'acide nonène-8 carboxylique-1 (ou caproléïque), l'acide décène-9 carboxylique-1, l'acide pentène-4 carboxylique-1, l'acide hexène-5 carboxylique-1, l'acide butène-3 carboxylique-1, l'acide octène-7 carboxylique-1, l'acide undécène-10 carboxylique-1 et l'acide dodécène-11 carboxylique-1.

Les époxydes terminaux que l'on emploie ont la formule générale suivante :

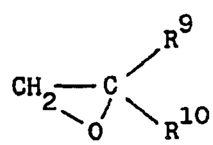

dans laquelle $R^9$ et $R^{10}$ ont la définition donnée ci-avant.

Comme composés spécifiques, on peut citer :
l'époxy-1,2-butane, l'époxy-1,2-pentane, l'époxy-1,2-hexane, l'époxy-1,2-heptane, l'époxy-1,2-octane, l'époxy-1,2-nonane, l'époxy-1,2-décane, l'époxy-1,2- undécane, l'époxy-1,2-dodécane, l'époxy-1,2-tétradécane, l'époxy-1,2-pentadécane, l'époxy-1,2-hexadécane, l'époxy-1,2-heptadécane, l'époxy-1,2-octadécane, l'époxy-1,2-nonadécane, l'époxy-1,2-eicosane, l'époxy-1,2-docosane, l'époxy-1,2-tétracosane, l'époxy-1,2-hexacosane et les polybutènes époxydés de masse moléculaire moyenne ($\overline{M}n$) comprise entre environ 350 et environ 600.

A titre d'exemples de composés utilisables pour transformer le groupe hydroxyle secondaire formé lors de la réaction entre l'acide monocarboxylique insaturé et l'époxyde terminal, on peut citer : le diméthylsulfate, le diéthylsulfate, et les anhydrides d'acides monocarboxyliques inférieurs tels que par exemple l'anhydride acétique et l'anhydride propionique.

• Les motifs (D) dérivant de composés acryliques, présents dans le copolymère, sont habituellement ceux représentés par la formule ci-avant dans laquelle $R^{12}$ représente un atome d'hydrogène ou un groupe méthyle

et Y est un groupe —OH, —$NHR^4$ ou de préférence —$OR^{13}$ où $R^{13}$ représente un radical alkyle, de préférence linéaire, ayant de 1 à 30 atomes de carbone et de préférence de 4 à 24 atomes de carbone et plus particulièrement de 12 à 22 atomes de carbone et $R^4$ représente un groupe alkyle, de préférence linéaire, de 1 à 30 atomes de carbone, de préférence de 4 à 24 atomes de carbone et plus particulièrement de 10 à 24 atomes de carbone.

Comme composés spécifiques, on peut citer : les acrylates et méthacrylates de méthyle, de propyle, de butyle, d'éthylhexyle, de décyle, de dodécyle, d'hexadécyle, d'octadécyle, d'eicosyle et de docosyle. On peut encore citer les acrylates et les méthacrylates de coupes industrielles d'alcools renfermant en moyenne 12 atomes de carbone (acrylate et méthacrylate de lauryle) ou 18 atomes de carbone (acrylate et méthacrylate de stéaryle), ainsi que des coupes d'alcools plus lourds, riches en alcools ayant 20 à 24 atomes de carbone.

Parmi les copolymères définis ci-avant, on considère plus particulièrement ceux dont la masse moléculaire moyenne est d'environ 1000 à 15000.

Les proportions respectives des motifs (A), (B), (C) et (D) qui composent le copolymère sont de préférence de 15 à 55% en moles de motifs (A), de 10 à 60% en moles de motifs (B), de 15 à 50% en moles de motifs (C) et un pourcentage de motifs (D) inférieur ou égal à celui des motifs (C).

De préférence, au moins 15% des motifs dudit copolymère sont des motifs (B) de formules générales ci-avant dans lesquelles X représente le groupe = $N-R^4$.

On préfère généralement qu'au moins 80% des motifs (B) présents dans le copolymère soient des motifs (B) de formules générales ci-avant dans lesquelles X représente le group = $N-R^4$.

Parmi les copolymères de l'invention, deux groupes sont particulièrement préférés : ceux qui ne comprennent pas de motifs (D) et contiennent uniquement des motifs (A), (B) et (C), la somme du pourcentage en moles de ces motifs étant alors égale à 100%, et ceux qui comprennent une proportion non nulle de motifs (D) la somme des motifs (A), (B), (C) et (D) étant alors égale à 100% et parmi ce dernier groupe on préfère ceux dont la proportion des motifs (D) est sensiblement égale à celle des motifs (C).

La préparation des additifs de la présente invention est en général effectuée en plusieurs étapes successives. Les schémas de préparation ci-après sont donnés à titre d'exemples non limitatifs.

Premier schéma

La préparation comprend les étapes suivantes :

a) On effectue la réaction d'au moins un acide insaturé sur au moins un monoépoxyde terminal pour former un ester-alcool de l'acide insaturé. Cette réaction est effectuée dans des conditions classiques, bien connues de l'homme du métier, par exemple par chauffage des réactifs, éventuellement en présence d'un solvant tel que par exemple un solvant hydrocarboné tel que le cyclohexane, le benzène, l'isooctane, le dodécane, le toluène, le xylène ou le diisopropylbenzène ou des coupes hydrocarbonées à point d'ébullition relativement élevé, telles qu'un kérosène ou un gazole ; la température de réaction est habituellement de 60 à 200°C et par exemple d'environ 160°C ; on emploie habituellement un catalyseur par exemple une base de Lewis ; à titre d'exemples de catalyseur, on peut citer les amines tertiaires, en particulier la triéthylamine, la N,N diméthylbenzylamine, etc... La durée de la réaction est variable suivant les autres conditions opératoires et les produits mis en jeu ; la réaction peut être suivie par exemple par mesure de l'indice d'acide ; une durée d'environ 3 heures est habituellement suffisante ;

b) le produit obtenu dans l'étape (a) est ensuite éventuellement mis en réaction, pour transformer au moins en partie les groupes hydroxyles en groupes alcoxy ou en groupes acyles.

Les techniques permettant cette transformation sont bien connues de l'homme du métier. Par exemple, l'estérification des groupes hydroxyles peut être effectuée à l'aide d'anhydrides d'acides, par exemple l'anhydride acétique. On emploie généralement un excès d'anhydride par rapport à la quantité d'ester-alcool que l'on veut transformer ; un rapport molaire anhydride/ester-alcool de 1,1 : 1 à 3 : 1 et par exemple environ 2 : 1 peut être utilisé.

La température de réaction est usuellement d'environ 60 à 180°C et par exemple d'environ 130°C ; la réaction peut être effectuée en absence ou en présence d'un solvant tel que par exemple l'un des solvents utilisés dans l'étape (a) ci-avant ;

c) on prépare le copolymère selon les méthodes classiques de copolymérisation par voie radicalaire, par exemple en présence d'un amorceur de type azobisisobutyronitrile ou peroxyde, en solution dans un solvant hydrocarboné tel que par exemple l'un des solvants utilisés dans l'étape (a) ci-avant ou encore un solvant oxygéné tel que par exemple le tétrahydrofuranne ou le dioxanne ; la quantité de solvant utilisée sera habituellement telle que la concentration pondérale en matière sèche se situe entre 25 et environ 70% et par exemple au voisinage de 60% ; la réaction de copolymérisation, en présence de l'amorceur radicalaire est effectuée à une température d'environ 70 à 210°C et de préférence d'environ 90 à 170°C, par

exemple à environ 140°C ; la durée de la réaction est variable selon les autres conditions opératoires, elle peut aller par exemple de 2 à 18 heures. On obtient une solution de copolymères sous la forme d'un liquide visqueux de couleur jaune clair. Dans cette étape de copolymérisation, on utilise au moins trois monomères : au moins une alpha oléfine, au moins un composé dicarboxylique insaturé et de préférence au moins un anhydride d'acide dicarboxylique tel que défini ci-avant par les formules décrivant les motifs (B) dans lesquelles X représente un atome d'oxygène, au moins un composé générateur de motifs (C) décrits ci-avant et éventuellement au moins un composé générateur de motifs (D) décrits ci-avant ;

d) on effectue enfin dans cette étape la condensation d'au moins un composé à fonction amine primaire sur le copolymère formé dans l'étape (c), selon toutes méthodes usuelles.

A la solution de copolymère obtenue comme décrit précédemment (étape (c)), on ajoute en général le composé à fonction amine primaire tel que décrit ci-avant en une proportion molaire correspondant sensiblement à la proportion de composés dicarboxyliques mis en jeu dans la préparation du copolymère. Cette proportion peut être par exemple d'environ 0,9 à 1,1 mole de composé à fonction amine primaire par mole de composé dicarboxylique.

La réaction est réalisée par chauffage du mélange à une température d'environ 70 à 200°C, de préférence d'environ 90 à 180°C et par exemple à environ 150°C ; la durée de réaction est généralement d'environ 1 à 24 heures, une durée de l'ordre de 4 heures étant habituellement suffisante.

La réaction des composés à fonction amine primaire sur au moins une partie des motifs (B) (motifs anhydride) du copolymère obtenu à l'étape (c) donne naissance à des groupements imides (succinimides) ; cette réaction étant accompagnée de la formation d'eau (ou d'alcools selon la nature des motifs dicarboxyliques (B)), on peut, si on le désire, évacuer cette eau (ou cet alcool) hors du mélange réactionnel, soit par entraînement avec un gaz inerte comme par exemple l'azote, soit par distillation azéotropique avec le solvant choisi.

Deuxième schéma

La préparation comprend les étapes suivantes :

a) on effectue la réaction entre au moins un composé dicarboxylique et au moins un composé à fonction amine primaire dans les conditions bien connues de l'homme du métier pour former des composés de type imide N-substitué ;

b) on effectue la copolymérisation d'au moins une alpha oléfine, d'au moins un acide insaturé tel que défini ci avant, d'au moins un composé à fonction imide N-substitué tel qu'obtenu à l'étape (a), et éventuellement au moins un composé générateur de motifs (D) décrits ci-avant, par voie radicalaire dans des conditions classiques et bien connues de l'homme du métier ;

c) on effectue la condensation du copolymère obtenu à l'étape (b) avec au moins un monoépoxyde terminal dans les conditions classiques de formation d'ester à partir d'époxyde et d'acides carboxyliques ; la quantité molaire d'époxyde terminal employée est généralement d'environ 1 mole à environ 3 moles et de préférence d'environ 1,1 mole à environ 2 moles par mole d'acide insaturé mis en jeu dans l'étape (b) de copolymérisation.

d) si on le désire, le produit résultant de l'étape (c) et comportant des groupes hydroxyles peut être mis en réaction de manière classique avec des réactifs permettant de transformer les groupes hydroxyles au moins en partie en groupes alcoxy ou acyles. On peut par exemple mettre le produit de l'étape (c) en réaction avec l'anhydride acétique de manière à transformer au moins en partie les groupes hydroxyles en groupes acétyles.

Troisième schéma

La préparation comprend les étapes suivantes :

a) on effectue la réaction entre au moins un composé dicarboxylique et au moins un composé à fonction amine primaire dans les conditions bien connues de l'homme du métier permettant de former des composés de type imide N-substitué ;

b) on effectue la réaction d'au moins un acide insaturé sur au moins un monoépoxyde terminal de manière à former, comme dans le premier schéma ci-avant à l'étape (a), un ester alcool de l'acide insaturé ;

c) le produit de l'étape (b) ci-avant est éventuellement mis en réaction avec un réactif permettant de transformer les groupes hydroxyles au moins en partie en groupes alcoxy ou en groupes acyles, par exemple comme décrit pour l'étape (b) selon le premier schéma ci-avant ;

d) on effectue la copolymérisation d'au moins une alpha oléfine, d'au moins un imide N-substitué obtenue à l'étape (a) du présent schéma, d'au moins un composé générateur de motifs (C) obtenu à l'étape (b) ou

à l'étape (c) du présent schéma et éventuellement d'au moins un composé générateur de motifs (D) décrits ci-avant ; ladite copolymérisation est effectuée de façon classique par voie radicalaire.

Quatrième schéma

Ce schéma s'applique essentiellement dans le cas de la préparation de copolymères comprenant des motifs (C) dérivant d'esters de l'acide acrylique de diols-1,2.

La préparation comprend les étapes suivantes :

a) on effectue la copolymérisation, dans des conditions classiques, par voie radicalaire, d'au moins une alpha oléfine, d'au moins un composé dicarboxylique insaturé (de préférence au moins un anhydride d'acide dicarboxylique tel que défini ci-avant par les formules décrivant les motifs (B) dans lesquelles X représente un atome d'oxygène), de l'acide acrylique et éventuellement au moins un composé générateur de motifs (D) décrits ci-avant ;

b) le copolymère obtenu à l'étape (a) est mis en réaction avec au moins un composé à fonction amine primaire de manière à transformer au moins en partie les motifs (B) (motifs anhydrides) en motifs (B) de type imide N-substitué ;

c) on met en réaction le produit obtenu à l'étape (b) ci-avant avec au moins un monoépoxyde de manière à transformer au moins en majeure partie et de préférence en totalité les motifs provenant de l'acide acrylique en motifs (C) de structure, ester-alcool, définie ci-avant ;

d) si on le désire, le produit résultant de l'étape (c) et comportant des groupes hydroxyles libres peut être mis en réaction de manière classique avec des réactifs permettant de transformer au moins en partie les groupes hydroxyles en groupes alcoxy ou acyles.

Les additifs sont obtenus en solution dans le solvant choisi et peuvent être utilisés sous cette forme directement dans les distillats moyens de pétrole (notamment dans les gazoles) dont on souhaite améliorer le point d'écoulement.

On observe une nette amélioration du point d'écoulement des distillats moyens traités par ces additifs, lorsqu'ils sont ajoutés à des concentrations allant par exemple de 0,001 à 2% en poids et de préférence de 0,01 à 1% en poids et plus avantageusement de 0,02 à 0,3% en poids. Parmi les copolymères de la présente invention, on emploie avantageusement ceux dans lesquels au moins deux types de motifs parmi les motifs (A), (B), (C) et (D) présente comportent au moins 12 atomes de carbone et de préférence au moins 16 atomes de carbone dans leur formule et très avantageusement ceux dans lesquels les motifs (A), (B) et (C), ainsi qu'éventuellement (D), comportent au moins 12 atomes de carbone et de préférence au moins 16 atomes de carbone dans leur formule. Ainsi, les motifs (A) préférés répondent à la formule :

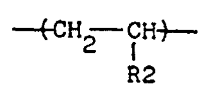

dans laquelle $R^2$ représente un groupe alkyle linéaire de 10 à 26 atomes de carbone ; les motifs (B) préférés dérivent de l'anhydride maléïque et des maléïmides N-subsitutés de formule :

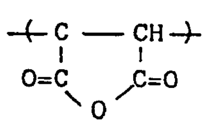

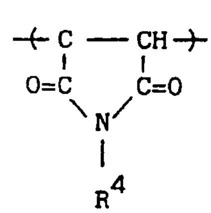

dans lesquelles $R^4$ est un radical organique monovalent dérivant d'une amine primaire ayant de 8 à 24 atomes de carbone et plus particulièrement $R^4$ est un radical linéaire provenant de préférence d'une amine de formule $R\text{-}NH_2$ où R est un radical alkyle linéaire de 10 à 24 atomes de carbone ou d'une diamine $R — NH — (CH_2)_n — NH_2$ où n est un nombre entier de 2 à 4, de préférence 3, et R un radical alkyle linéaire de 10 à 24 atomes de carbone ; les motifs (C) préférés répondent à l'une des formules :

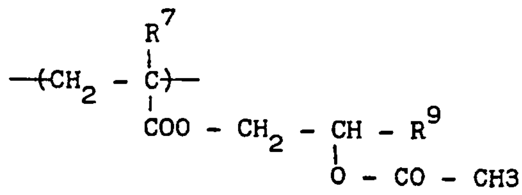

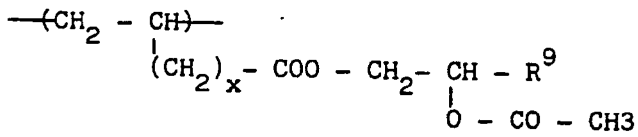

dans lesquelles $R^7$ est l'hydrogène ou un groupe méthyle, x est un nombre entier de 6 à 21 et $R^9$ un radical alkyle linéaire de 10 à 26 atomes de carbone ; et les motifs (D) préférés, lorsque le copolymère en contient, proviennent d'acrylate et/ou de méthacrylate d'alkyle dont le groupe alkyle est linéaire et comporte de 12 à 22 atomes.

Les compositions de distillats moyens de l'invention comprennent une proportion majeure de distillat moyen de pétrole ayant un intervalle de distillation entre 150 et 450°C et une proportion mineure, suffisante pour en abaisser le point d'écoulement, d'au moins un copolymère tel que défini ci-avant. Le distillat moyen de pétrole peut consister plus particulièrement en une coupe de gazole ayant un intervalle de distillation allant d'une température initiale de 160 à 190°C à une température finale de 360 à 430°C. La proportion de copolymère peut être de 0,001 à 2% en poids, de préférence de 0,01 à 1% en poids.

Les compositions de distillats moyens ainsi définies peuvent également comprendre d'autres additifs tels que des antioxydants, des agents dispersants, antistatiques, etc... Ces compositions comprennent généralement au moins 95% et de préférence au moins 98% en poids de distillat moyen.

L'abaissement du point d'écoulement peut aller par exemple jusqu'à 15°C ou plus. En outre, il est possible d'observer simultanément un abaissement du point de trouble pouvant aller par exemple jusqu'à 2°C ou plus.

Les exemples suivants illustrent l'invention, sans en limiter la portée.

Exemple 1

a) On introduit dans un réacteur muni d'un système d'agitation et d'un système de régulation de température 27,6 g (0,15 mole) d'acide undécylénique et 41,4 g (0,15 équivalent molaire) d'époxyoctadécane à 5,8% d'oxygène. A 40°C sous agitation, l'époxyalcane se dissout. On ajoute alors 0,36 g ($2{,}7 \cdot 10^{-3}$ mole) de N,N-diméthylbenzylamine dans 4,5 g de xylène. La masse réactionnelle est portée pendant 3 heures à 160°C. L'ouverture du cycle époxyde et la fixation de l'acide sont suivies par mesure de l'indice d'acide. Après 3 heures de réaction, l'indice d'acide est passé de 103 à 7,3 mg de potasse par gramme. On obtient l'ester-alcool (avec un rendement de 93%) que l'on isole sous forme d'un produit jaune solide.

b) Dans le même réacteur, on introduit 36 g de l'ester-alcool obtenu à l'étape (a) soit 0,079 mole, et 15 g d'anhydride acétique, soit 0,147 mole. On porte l'ensemble à 130°C pendant 3 heures. Le spectre infrarouge montre que la bande caractéristique des alcools secondaires, située à environ 3.350 $cm^{-1}$ disparait au cours de la réaction. La masse réactionnelle est étendue par 50 ml de xylène, neutralisée à l'aide d'une solution aqueuse de bicarbonate de sodium, lavée à l'eau puis séchée sur sulfate de sodium ; après évaporation du xylène, on obtient le diester insaturé qui est un produit liquide.

c) Dans un réacteur à double enveloppe muni d'un système d'agitation, d'un système de régulation de température et d'une arrivée de gaz inerte, on introduit : 7,4 g (0,076 mole) d'anhydride maléïque, 11 g (0,038 mole) d'une coupe d'alpha oléfines composée en poids d'environ 1% d'oléfines en $C_{18}$, 49% d'oléfines en $C_{20}$, 42% d'oléfines en $C_{22}$ et 8% d'oléfines en $C_{24}$, 37,5 g (0,076 mole) du diester insaturé obtenu à l'étape (b) et 85 g de xylène. On introduit ensuite en continu pendant 6 heures à l'aide d'une pompe seringue 0,58 g de peroxybenzoate de tertiobutyle dilué par une faible quantité de xylène.

On porte à 140°C pendant 7 heures, en agitant, et l'on obtient un copolymère en solution sous forme d'un liquide jaune clair visqueux, contenant environ 37% en moles de motifs dérivant du diester insaturé, 18% en moles de motifs dérivant des alpha oléfines et 45% en moles de motifs dérivant de l'anhydride maléïque; sa masse moléculaire en nombre est de 5300.

d) Dans le même réacteur à double enveloppe muni d'un appareil Dean et Stark, on ajoute à la solution obtenue à l'étape (c), 21,3 g (0,076 équivalent molaire) d'une coupe d'amines grasses primaires dont les chaînes alkyles comportent en moyenne en moles 1% de $C_{14}$, 28% de $C_{16}$, et 71% de $C_{18}$. Après 4 heures de chauffage à 150°C et récupération de 1,2 ml d'eau, on obtient une solution jaune clair visqueuse qui constitue "la solution mère" de l'additif I à une teneur de 52% en poids de matière sèche.
L'analyse infra-rouge de cette solution montre la disparition de la bande d'absorption correspondant aux liaisons C = O de type anhydride initialement localisée à environ 1775 $cm^{-1}$ ; parallèlement on observe l'apparition d'une bande, aux environs de 1705-1695 $cm^{-1}$, attribuable aux laisions C = O de type imide.
La masse moléculaire en nombre de l'additif I est de 5800.

Exemples 2 et 3

On prépare de la même manière que dans l'exemple 1 un copolymère à partir des mêmes composés que ceux utilisés dans l'exemple 1 et l'on procède sur diverses parts de ce polymère à la condensation de composés présentant des fonctions amines primaires en suivant le mode opératoire décrit dans l'étape (d) de l'exemple 1 en employant les mêmes proportions molaires que dans l'exemple 1.

Exemple 2

La coupe d'amines grasses primaires utilisée est une coupe dont les chaînes alkyles comportent en moyenne en moles environ 3% de $C_8$, 6% de $C_{10}$, 56% de $C_{12}$, 18% de $C_{14}$, 10% de $C_{16}$ et 7% de $C_{18}$. On obtient ainsi une solution de l'additif II.

Exemple 3

La coupe d'amines utilisée est une coupe de N-alkyl-diamino-1,3 propane composée d'amines dont les chaînes alkyles comprennent en moles en moyenne environ 1% de $C_{14}$, 5% de $C_{16}$, 42% de $C_{18}$, 12% de $C_{20}$ et 40% de $C_{22}$. On obtient ainsi une solution de l'additif III.

Exemples 4, 5 et 6

On prépare suivant les conditions expérimentales décrites dans l'exemple 1 étapes (a) et (b) un diester insaturé et l'on procède sur trois parts de ce diester insaturé, à la polymérisation décrite dans l'exemple 1 étape (c) en changeant les alpha oléfines utilisées. On condense ensuite sur ces trois nouveaux copolymères la même coupe d'amines grasses que celle qui a été utilisée dans l'exemple 1 à l'étape (d) en suivant le mode opératoire décrit à l'étape (d) de l'exemple 1.

Exemple 4

La coupe d'alpha oléfines utilisée pour préparer le copolymère est composée en moyenne en poids d'environ 1% d'oléfines en $C_{14}$, 17% d'oléfines en $C_{15}$, 18% d'oléfines en $C_{16}$, 17% d'oléfines en $C_{17}$, 17% d'oléfines en $C_{18}$, 15% d'oléfines en $C_{19}$, 12% d'oléfines en $C_{20}$ et 3% d'oléfines en $C_{21}$. Après condensation de la coupe d'amines décrite dans l'exemple 1 à l'étape (d), on obtient l'additif IV.

Exemple 5

La coupe d'alpha oléfines utilisée pour préparer le copolymère est composée en moyenne en poids d'environ 1% d'oléfines en $C_{22}$, 30% d'oléfines en $C_{24}$, 39% d'oléfines en $C_{26}$, 20% en $C_{28}$ et 10% d'oléfines en $C_{30}$. La condensation sur le copolymère obtenu, de la coupe d'amines décrite dans l'exemple 1 à l'étape (d) fournit l'additif V.

Exemple 6

L'alpha oléfine utilisée pour préparer le copolymère est le diisobutylène. Après condensation de la coupe d'amines décrite dans l'exemple 1 à l'étape (d), on obtient l'additif VI.

Exemples 7 et 8

On prépare suivant les conditions expérimentales décrites dans l'exemple 1 à l'étape (a) deux esters-alcools qui diffèrent de celui qui a été préparé à l'étape (a) de l'exemple 1 par la nature de l'époxyalcane utilisé. On estérifie ces deux esters-alcools par l'anhydride acétique en suivant le mode opératoire décrit dans l'exemple 1 à l'étape (b) ; on polymérise avec les mêmes monomères et dans les mêmes conditions qu'à l'étape (c) de l'exemple 1 et l'on condense sur ces deux nouveaux copolymères la même coupe d'amines grasses que celle qui a été utilisée dans l'exemple 1 à l'étape (d) en suivant le même mode opératoire.

Example 7

L'époxyalcane utilisé a été obtenu par oxydation d'une coupe d'alpha oléfines composée en moyenne en poids d'environ 1% d'oléfines en $C_{18}$, 49% d'oléfines en $C_{20}$, 42% d'oléfines en $C_{22}$ et 8% d'oléfines en $C_{24}$. Les étapes (a), (b), (c) et (d) sont effectuées comme dans l'exemple 1 dans les mêmes conditions. On obtient ainsi l'additif VII.

Exemple 8

L'époxyalcane utilisé est l'époxyhexadécane à 62% d'oxygène. Après les opérations décrites dans l'exemple 1 aux étapes (a) (b) (c) et (d), on obtient l'additif VIII.

Exemple 9

a) On introduit dans un réacteur à double enveloppe muni d'un système d'agitation, d'un réfrigérant et d'une arrivée de gaz inerte : 58 g (0,2 mole) d'une coupe d'alpha oléfines composée en poids d'environ 1% d'oléfines en $C_{18}$, 49% d'oléfines en $C_{20}$, 42% d'oléfines $C_{22}$ et 8% d'oléfines en $C_{24}$, 39,2 g (0,4 mole) d'anhydride maléïque, dans 189 g de xylène. La masse réactionnelle est portée à 140°C. On introduit alors en continu pendant 7 heures, à l'aide d'une pompe à seringue, 28,8 g (0,4 mole) d'acide acrylique et 3,05 g de peroxybenzoate de tertiobutyle dilué par une faible quantité de xylène. On maintient encore pendant une heure la température dans le réacteur à 140°C et l'on obtient un copolymère en solution sous forme d'un liquide jaune claire visqueux, contenant 42% en moles de motifs dérivant de l'acide acrylique, 42% en moles de motifs dérivant de l'anhydride maléïque et 16% en moles de motifs dérivant des alpha oléfines; sa masse moléculaire en nombre est de 4500.

b) Dans un réacteur à double enveloppe muni d'un appareil Dean et Stark, on introduit 159 g de la solution du copolymère obtenu à l'étape (a) et 56 g (0,2 équivalent molaire) d'une coupe d'amines grasses primaires dont les chaînes alkyles comportent en moyenne en moles 1% de $C_{14}$, 28% de $C_{16}$, et 71% de $C_{18}$. Après 3 heures de chauffage à 150°C, on récupère 3,5 ml d'eau et une solution jaune clair, visqueuse, à 54% en poids de matière sèche dans le xylène. L'analyse infra-rouge montre la présence de bandes attribuables aux liaisons C = O de type imide.

c) Dans un réacteur muni d'un système d'agitation et d'un réfrigérant, on introduit 105 g de la solution obtenue à l'étape (b) (soit 0,1 équivalent molaire) et 27,6 g (soit 0,1 équivalent molaire) d'époxyoctadécane à 5,8% d'oxygène. On ajoute ensuite 0,65 g de N,N-diméthylbenzylamine, puis on chauffe pendant 4 heures à 160°C. On obtient une solution que l'on dilue par addition de xylène afin de ramener sa concentration en matière sèche à 50% en poids. La solution diluée obtenue constitue "la solution mère" de l'additif IX. La masse moléculaire en nombre de l'additif IX est de 5200.

Exemple 10

On prépare suivant les conditions expérimentales décrites dans l'exemple 1 à l'étape (a) un ester-alcool qui diffère de celui qui a été préparé dans l'exemple 1 à l'étape (a) par la nature de l'acide insaturé. Il s'agit d'une coupe d'acides insaturés composée de 20% en moles d'acide en $C_{11}$, 64% en moles d'acide en $C_{13}$, 2,8% en moles d'acide en $C_{16}$ et 6,4% en moles d'acide plus légers que $C_{11}$ ou plus lourds que $C_{16}$.

On polymérise 0,05 mole de cet ester-alcool (soit 24,4 g) avec 0,05 mole d'acrylate d'éthyl 2-hexyle (soit 9,2 g), 0,05 mole de la coupe d'oléfines en $C_{18}$-$C_{24}$ décrite dans l'exemple 1 à l'étape (c) (soit 14,5 g) et 0,1 mole d'anhydride maléique (soit 9.8 g), dans les mêmes conditions que dans l'exemple 1 à l'étape (c) ; puis l'on condense sur ce copolymère la même coupe d'amines grasses que celle qui a été utilisée dans l'exemple 1 à l'étape (d) en suivant le même mode opératoire. On obtient ainsi l'additif X.

Exemple 11 (exemple comparatif)

On prépare dans les conditions d'estérification habituelles, de l'undécylénate de stéaryle à partir d'acide undécène-10-oïque et d'octadécanol et on copolymérise dans les mêmes conditions que dans l'exemple 1 à l'etape (c) : 0,1 mole de la coupe d'oléfines en $C_{18}$-$C_{24}$ décrite dans l'exemple 1 à l'étape (c) (soit 29 g), 0,2 mole d'anhydride maléïque (soit 19,6 g) et 0,2 mole d'undécylénate de stéaryle (soit 87,3 g) en présence de 204 g de xylène.

On obtient un copolymère en solution sous forme d'un liquide jaune clair visqueux contenant environ 38% en poids de matière sèche.

Puis l'on condense sur ce copolymère la même coupe d'amines grasses que celle qui a été utilisée dans l'exemple 1 de l'étape (d) en suivant le même mode opératoire. On obtient ainsi l'additif XI.

Exemple 12 (exemple comparatif)

On prépare dans les mêmes conditions que dans l'exemple 1 à l'étape (c), un terpolymère en faisant réagir 70 g d'un mélange d'acrylates d'alkyle (contenant environ 5% d'acrylate de stéaryle, 30% d'acrylate d'eicosyle et 25% d'acrylate de béhényle) avec 15 g d'anhydride maléique et 15 g de diisobutylène. A la solution obtenue, on ajoute 43 g de la coupe d'amines grasses utilisée dans l'exemple 1 à l'étape (d). La réaction est effectuée en suivant le mode opératoire décrit dans l'exemple 1 à l'étape (d). On obtient ainsi l'additif XII.

Les additifs décrits ci-dessus sont obtenus en solution dans le xylène. Leur concentration est généralement ajustée à 50% de matière sèche ; les solutions obtenues constituent des "solutions mères" de ces additifs, dont on teste l'activité en les incorporant à raison de 0,1% en poids d'additif par rapport au gazole, à deux coupes de gazoles d'origine ARAMCO, désignées par la suite : $G_1$ et $G_2$. Les caractéristiques de ces coupes sont indiquées dans le tableau I ci-après :

TABLEAU I

| Gazoles | Distillation ASTM D 86 - 67 | | % distillé à 350 °C | Masse volumique à 15 °C en kg/l |
|---|---|---|---|---|
| | Pi °C | Pf °C | | |
| $G_1$ | 181 | 382 | 89 | 0,846 |
| $G_2$ | 189 | 373 | 93 | 0,844 |

Pour chacune des compositions ainsi formées, deux déterminations ont été effectuées :

— le point de trouble suivant la norme ASTM D 2500-66

— le point d'écoulement suivant la norme ASTM D 97-60.

Les résultats de ces déterminations sont rassemblés dans le tableau II ci-après :

TABLEAU II

| Additifs | Point de trouble (°C) | | Point d'écoulement (°C) | |
|---|---|---|---|---|
| | $G_1$ | $G_2$ | $G_1$ | $G_2$ |
| sans | + 2 | - 1 | - 6 | - 9 |
| 0,1 % I | - 1 | - 4 | - 21 | - 21 |
| " II | 0 | - 3 | - 18 | - 18 |
| " III | - 1 | - 3 | - 15 | - 18 |
| " IV | 0 | - 3 | - 18 | - 24 |
| " V | 0 | - 2 | - 21 | - 21 |
| " VI | 0 | - 3 | - 15 | - 18 |
| " VII | - 1 | - 4 | - 12 | - 15 |
| " VIII | 0 | - 2 | - 24 | - 27 |
| " IX | - 2 | - 5 | - 12 | - 12 |
| " X | 0 | - 2 | - 18 | - 15 |
| " XI | - 1 | - 4 | - 6 | - 9 |
| " XII | - 1 | - 4 | - 9 | - 9 |

Les résultats présentés dans ce tableau montrent une bonne efficacité des additifs I à X surtout dans l'abaissement du point d'écoulement, alors que les additifs XI et XII quine correspondent pas à l'invention mais sont donnés à titre de comparaison, ne sont efficaces que dans l'abaissement du point de trouble.

## Revendications

1. Copolymère de masse moléculaire moyenne en nombre d'environ 400 à 50000 comprenant :

a) de 5 à 60% en moles de motifs (A) dérivant d'alpha oléfines ayant de 2 à 36 atomes de carbone dans leur molécule et répondant à la formule générale :

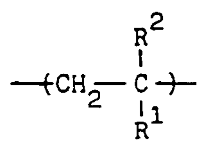

dans laquelle $R^1$ représente un atome d'hydrogène ou un groupe alkyle inférieur de 1 à 4 atomes de carbone ; et $R^2$ représente un atome d'hydrogène ou un groupe alkyle de 1 à 30 atomes de carbone ;

b) de 10 à 70% en moles de motifs (B) dérivant de composés dicarboxyliques insaturés et répondant à l'une des formules générales :

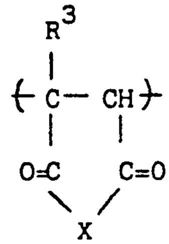 ou 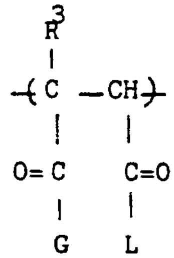 ou 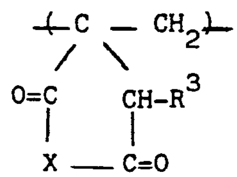 ou 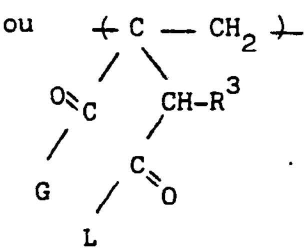

ou 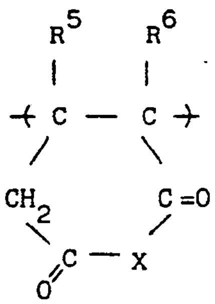 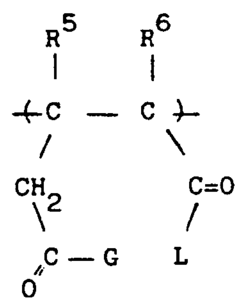

dans lesquelles $R^3$ représente un atome d'hydrogène ou un groupe alkyle inférieur de 1 à 4 atomes de carbone ; X représente un atome d'oxygène ou un groupe $= N-R^4$ où $R^4$ représente un radical organique monovalent dérivant d'un composé renfermant une fonction amine primaire répondant à l'une des formules générales :

$$R - Z[(CH_2)_n NH]_m H \quad \text{ou} \quad HO - R^{14} - NH_2$$

où R représente un radical aliphatique monovalent de 1 à 30 atomes de carbone ; Z est choisi parmi l'atome d'oxygène —O— et les groupes $—NR^{15}—$ dans lesquels $R^{15}$ représente un atome d'hydrogène ou un radical aliphatique monovalent de 1 à 30 atomes de carbone ; n est un nombre entier de 2 à 4 ; m est zéro lorsque Z est —NH— ou un nombre entier de 1 à 4 dans tous les cas ; $R^{14}$ représente un radical aliphatique divalent de 2 à 30 atomes de carbone ; G et L identiques ou différents, représentent chacun un group —OH, $—OR^1$ ou $—NHR^4$, où $R^1$ et $R^4$ sont définis comme précédemment ; et $R^5$ et $R^6$ identiques ou différents, représentent chacun un atome d'hydrogène ou un groupe alkyle inférieur de 1 à 4 atomes de carbone, au moins l'un d'entre eux représentant un atome d'hydrogène ;

c) de 10% à 60% en moles de motifs (C) dérivant d'esters insaturés de diols-1,2 répondant à la formule générale

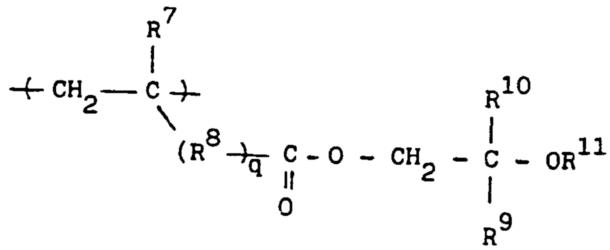

dans laquelle $R^7$ et $R^{10}$, identiques ou différents, représentent chacun un atome d'hydrogène ou un groupe alkyle inférieur de 1 à 4 atomes de carbone ; $R^8$ représente un radical aliphatique divalent de 1 à 30 atomes de carbone ; q est égal à zéro ou à 1 ; $R^9$ représente un radical aliphatique monovalent de 2 à 30 atomes de carbone ; et $R^{11}$ représente un atome d'hydrogène, un groupe alkyle inférieur de 1 à 4 atomes de carbone ou un radical acyle inférieur de 1 à 4 atomes de carbone ; et

d) de 0 à 60% en moles de motifs (D) dérivant de composés acryliques répondant à la formule générale :

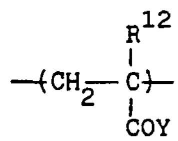

dans laquelle $R^{12}$ représente un atome d'hydrogène ou un radical alkyle inférieur de 1 à 4 atomes de carbone ; Y représente un groupe OH, —$NHR^4$ ou $OR^{13}$ dans lesquels $R^4$ a la définition ci-avant et $R^{13}$ représente un radical alkyle de 1 à 30 atomes de carbone ; l'un au moins des motifs (A), (B), (C) et/ou (D) dudit copolymère comportant au moins 12 atomes de carbone dans sa formule et au moins 10% des motifs dudit copolymère étant des motifs (B) de type imide de formules générales ci-avant dans lesquelles X représente le groupe = $N-R^4$.

2. Copolymère selon la revendication 1 caractérisé en ce que les motifs (A) dérivent d'une alpha oléfine linéaire ayant de 2 à 30 atomes de carbone, les motifs (B) dérivent de composés dicarboxyliques insaturés choisis dans le groupe formé par les anhydrides et les imides N-substitués dérivés de l'acide maléïque, de l'acide méthylmaléïque, de l'acide itaconique et de l'acide glutaconique, les motifs (C) dérivent d'esters insaturés de diol-1,2 et répondent à l'une au moins des formules générales :

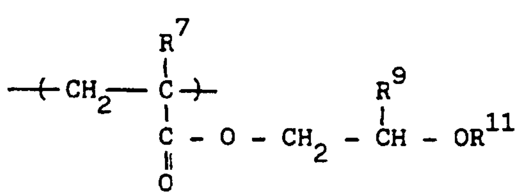

et

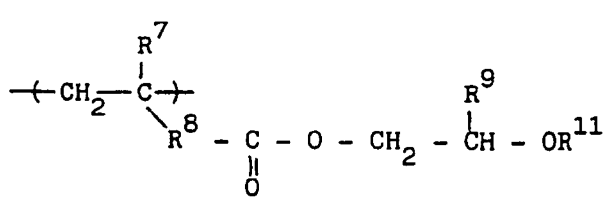

dans lesquelles $R^7$ représente un atome d'hydrogène ou un groupe méthyle ; $R^8$ représente un radical aliphatique divalent saturé de 6 à 24 atomes de carbone ; $R^9$ représente un radical aliphatique saturé, monovalent de 6 à 28 atomes de carbone ; et $R^{11}$ représente un atome d'hydrogène ou le groupe acétyle, et les motifs (D) dérivent de composés acryliques et répondent à la formule :

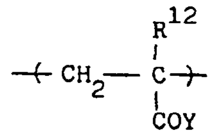

dans laquelle Y représente un groupe—OH,—NHR$^4$ ou—OR$^{13}$ dans lesquels R$^{13}$ représente un groupe alkyle de 4 à 24 atomes de carbone ; R$^4$ représente un groupe alkyle de 4 à 24 atomes de carbone ; et R$^{12}$ représente un atome d'hydrogène ou un groupe méthyle.

3. Copolymère selon la revendication 1 ou 2 caractérisé en ce que les motifs (A) dérivent d'une alpha oléfine linéaire ayant de 12 à 28 atomes de carbone, les motifs (B) dérivent de l'anhydride maléïque et de maléïmides N-substitués, les motifs (C) dérivent d'esters insaturés de diols-1,2, et répondent à l'une au moins des formules:

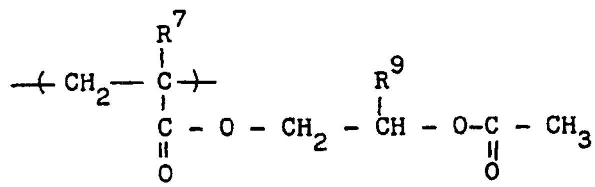

et

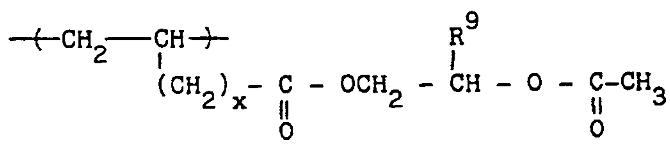

dans lesquelles R$^7$ représente un atome d'hydrogène ou un groupe méthyle ; R$^9$ représente un radical aliphatique saturé linéaire monovalent de 10 à 26 atoms de carbone ; et x est un nombre entier de 6 à 21, et les motifs (D) dérivent de composés acryliques et répondent à la formule :

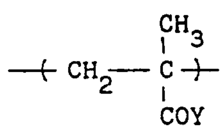

dans laquelle Y représente un groupe—OH,—NHR$^4$ ou—OR$^{13}$ dans lesquels R$^{13}$ représente un groupe alkyle de 12 à 22 atomes de carbone, et R$^4$ représente un groupe alkyle de 10 à 24 atomes de carbone.

4. Copolymère selon l'une des revendications 1 à 3 caractérisé en ce que les motifs (B) dérivent de l'anhydride maléïque ou de maléimides N-substitués dont le substituant provient d'un composé à fonction amine primaire répondant à l'une des formules générales : R-NH$_2$ dans laquelle R représente un radical alkyle linéaire de 10 à 24 atomes de carbone ;

$$R - NR^{15} - [-(CH_2)_n - NH]_m - H$$

dans laquelle R représente un radical alkyle linéaire de 8 à 24 atomes de carbone ; R$^{15}$ représente un atome d'hydrogène ou un radical alkyle linéaire de 1 à 24 atomes de carbone, R et R$^{15}$ renfermant ensemble de 9 à 32 atomes de carbone ; n est un nombre entier de 2 à 4 et m est un nombre entier de 1 à 4 :

$$R - O[-(CH_2)_n - NH]_m - H$$

dans laquelle R représente un radical alkyle linéaire de 8 à 24 atomes de carbone ; n est un nombre entier de 2 à 4 ; et m est un nombre entier de 1 à 4 ;

$$HO - R^{14} - NH_2$$

dans laquelle $R^{14}$ représente un radical alkylène, linéaire ou ramifié, de 8 à 24 atomes de carbone.

5. Copolymère selon l'une des revendications 1 à 4 caractérisé en ce qu'il comporte de 15 à 55% en moles de motifs (A), de 10 à 60% en moles de motifs (B), de 10 à 50% en moles de motifs (C) et un pourcentage de motifs (D) inférieur ou égal à celui des motifs (C), la somme des pourcentages en moles des motifs (A), (B), (C) et (D) qu'il comporte étant égale à 100%.

6. Copolymère selon l'une des revendications 1 à 5 caractérisé en ce qu'il ne comporte pas de motifs (D), la somme des pourcentages en moles des motifs (A), (B) et (C) qu'il comporte étant égale à 100%.

7. Procédé de préparation d'un copolymère selon l'une des revendications 1 à 6 caractérisé en ce qu'il comporte les étapes suivantes :

a) on effectue la réaction d'un acide insaturé sur un monoépoxyde terminal de manière à former un ester-alcool dudit acide insaturé ;

b) on met éventuellement en réaction l'ester-alcool de l'acide insaturé obtenu à l'étape (a) avec un réactif permettant de transformer les groupes hydroxyles au moins en partie en groupes alcoxy ou en groupes acyles ;

c) on effectue la copolymérisation, par voie radicalaire, d'un mélange comprenant au moins une alpha oléfine, au moins un anhydride d'acide dicarboxylique, au moins un composé tel qu'obtenu à l'étape (a) ou à l'étape (b) ci-dessus et éventuellement au moins un ester acrylique ; et

d) on effectue la condensation d'au moins un composé à fonction amine primaire sur le copolymère obtenu à l'étape (c) dans des conditions permettant de transformer au moins en partie les groupes anhydrides du copolymère obtenu à l'étape (c) en groupes imides N-substitués.

8. Procédé de préparation d'un copolymère selon l'une des revendications 1 à 6 caractérisé en ce qu'il comporte les étapes suivantes :

a) on effectue la copolymérisation, par voie radicalaire, d'un mélange d'au moins une alpha oléfine, d'au moins un anhydride d'acide dicarboxylique, d'acide acrylique et éventuellement d'au moins un ester acrylique ;

b) on met en réaction le copolymère obtenu à l'étape (a) avec un composé à fonction amine primaire dans des conditions permettant de transformer au moins en partie les groupes anhydrides du copolymère obtenu à l'étape (a) en groupes imides N-substitués ;

c) on met en réaction le produit obtenu à l'étape (b) avec au moins un monoépoxyde terminal de manière à transformer au moins en majeure partie les motifs provenant de l'acide acrylique contenu dans le produit obtenu à l'étape (b) en motifs de structure ester-alcool ; et

d) on met éventuellement en réaction le produit obtenu à l'étape (c) avec un réactif permettant de transformer au moins en partie les groupes hydroxyles en groupes alcoxy ou en groupes acyles.

9. Composition de distillat moyen caractérisé en ce qu'elle comprend une proportion majeure de distillat moyen ayant un intervalle de distillation entre 150 et 450°C et une proportion mineure, suffisante pour en abaisser le point d'écoulement, d'au moins un copolymère selon l'une des revendications 1 à 6.

10. Composition de distillat moyen selon la revendication 9 caractérisé en ce que ledit distillat moyen consiste en une coupe de gazole ayant un intervalle de distillation allant d'une température initiale de 160 à 190°C à une température finale de 360 à 430°C.

11. Composition de distillat moyen selon la revendication 9 ou 10 caractérisé en ce que la proportion dudit copolymère est de 0,001 à 2% en poids.

12. Composition de distillat moyen selon la revendication 11 caractérisé en ce que la proportion dudit copolymère est de 0,01 à 1% en poids.

**Patentansprüche**

1. Copolymer mit einem zahlendurchschnittlichen Molekulargewicht von etwa 400 bis etwa 50000, das umfaßt :

(a) 5 bis 60 Mol-% Einheiten (A), die von α-Olefinen mit 2 bis 36 Kohlenstoffatomen in ihrem Molekül abgeleitet sind und der allgemeinen Formel entsprechen :

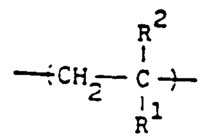

worin $R^1$ ein Wasserstoffatom oder eine niedere Alkylgruppe mit 1 bis 4 Kohlenstoffatomen und $R^2$ ein Wasserstoffatom oder eine Alkylgruppe mit 1 bis 30 Kohlenstoffatomen darstellen ;

(b) 10 bis 70 Mol-% Einheiten (B), die von ungesättigten Dicarbonsäureverbindungen abgeleitet sind und einer der folgenden allgemeinen Formeln entsprechen :

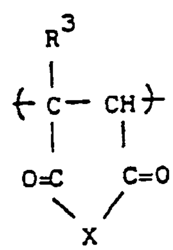 oder 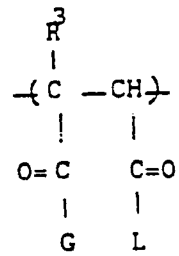 oder 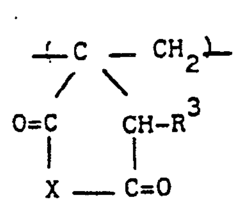 oder 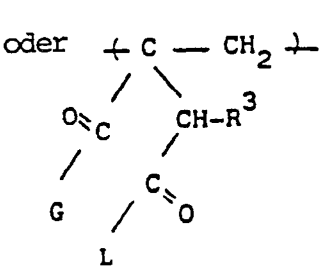

oder 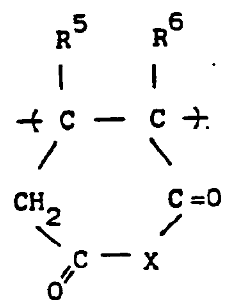 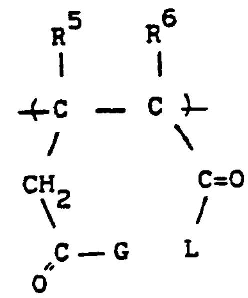

worin darstellen :

$R^3$ ein Wasserstoffatom oder eine niedere Alkylgruppe mit 1 bis 4 Kohlenstoffatomen ; X ein Sauerstoffatom oder eine Gruppe = N-$R^4$, worin $R^4$ steht für einen monovalenten organischen Rest, der abgeleitet ist von einer Verbindung, die eine primäre Aminfunktion enthält, und einer der allgemeinen Formeln entspricht :

$$R - Z\left[(CH_2)_n NH\right]_m H \text{ oder } HO - R^{14} - NH_2$$

worin R für einen monovalenten aliphatischen Rest mit 1 bis 30 Kohlenstoffatomen steht ; Z ausgewählt wird aus einem Wasserstoffatom- —O— und den Gruppen —$NR^{15}$—, worin $R^{15}$ ein Wasserstoffatom oder einen monovalenten aliphatischen Rest mit 1 bis 30 Kohlenstoffatomen darstellt ; n für eine ganze Zahl von 2 bis 4 steht ; m für die Zahl 0 steht, wenn Z—NH— bedeutet, oder in allen Fällen für eine ganze Zahl von 1 bis 4 steht ; $R^{14}$ für dinendivalen aliphatischen Rest mit 2 bis 30 Kohlenstoffatomen steht ;

G und L, die gleich oder verschieden sind, jeweils eine Gruppe—OH,—$OR^1$ oder—$NHR^4$ darstellen, worin $R^1$ und $R^4$ wie oben definiert sind ; und

$R^5$ und $R^6$, die gleich oder verschieden sind, jeweils ein Wasserstoffatom darstellen oder eine niedere Alkylgruppe mit 1 bis 4 Kohlenstoffatomen, wobei mindestens einer von ihnen ein Wasserstoffatom darstellt ;

(c) 10 bis 60 Mol-% Einheiten (C), die abgeleitet sind von ungesättigten Estern von 1,2-Diolen der allgemeinen Formel

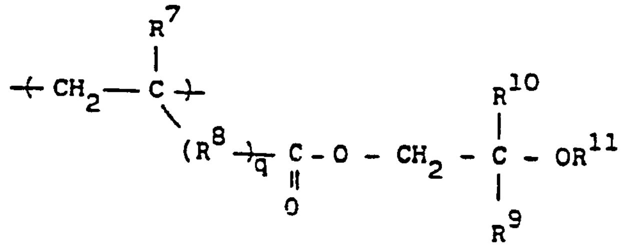

worin $R^7$ und $R^{10}$, die gleich oder verschieden sind, jeweils ein Wasserstoffatom oder eine niedere Alkylgruppe mit 1 bis 4 Kohlenstoffatomen ; $R^8$ einen divalenten aliphatischen Rest mit 1 bis 30 Kohlenstoffatomen ; q die ganze Zahl 0 oder − 1 ; $R^9$ einen monovalenten aliphatischen Rest mit 2 bis 30 Kohlenstoffatomen ; und $R^{11}$ ein Wasserstoffatom, eine niedere Alkylgruppe mit 1 bis 4 Kohlenstoffatomen oder einen niederen Alkylrest mit 1 bis 4 Kohlenstoffatomen darstellen ; und

(d) 0 bis 60 Mol-% Einheiten (D), die von Acrylverbindungen abgeleitet sind und die allgemeine Formel haben

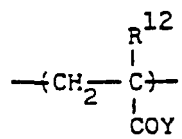

worin $R^{12}$ ein Wasserstoffatom oder einen niederen Alkylrest mit 1 bis 4 Kohlenstoffatomen ; Y eine Gruppe —OH, —$NHR^4$ oder —$OR^{13}$ bedeutet, worin $R^4$ die oben angegebene Bedeutung hat und $R^{13}$ für einen Alkylrest mit 1 bis 30 Kohlenstoffatomen steht ;

wobei mindestens eine der Einheiten (A), (B), (C) und/oder (D) des Copolymers mindestens 12 Kohlenstoffatome in seiner Formel enthält und mindestens 10% der Einheiten des Copolymers Einheiten (B) vom Imid-Typ der vorstehend angegebenen allgemeinen Formel sind, in denen X für die Gruppe = $NR^4$ steht.

2. Copolymer nach Anspruch 1, dadurch gekennzeichnet, daß die Einheiten (A) abgeleitet sind von einem linearen α-Olefin mit 2 bis 30 Kohlenstoffatomen, daß die Einheiten (B) abgeleitet sind von ungesättigten Dicarbonsäureverbindungen, ausgewählt aus der Gruppe, die besteht aus Anhydriden und N-substituierten Imiden, die von der Maleinsäure, der Methylmaleinsäure, der Itaconsäure und der Glutaconsäure abgeleitet sind, daß die Einheiten (C) abgeleitet sind von ungesättigten 1,2- Diolestern und einer der folgenden allgemeinen Formeln entsprechen :

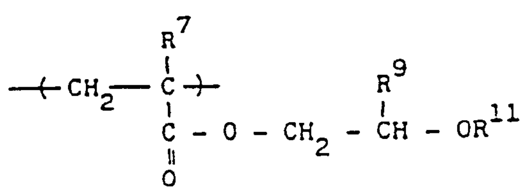

und

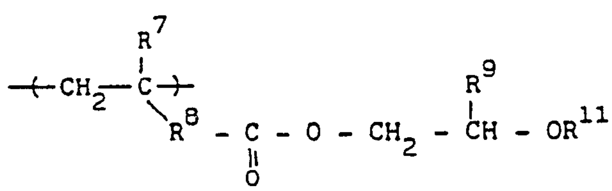

worin $R^7$ ein Wasserstoffatom oder eine Methylgruppe ; $R^8$ einen divalenten gesättigten aliphatischen Rest mit 6 bis 24 Kohlenstoffatomen ; $R^9$ einen gesättigten monovalenten aliphatischen Rest mit 6 bis 28 Kohlenstoffatomen ; und $R^{11}$ ein Wasserstöffatom oder die Acetylgruppe darstellen,

und daß die Einheiten (D) von Acrylverbindungen abgeleitet sind und die Formel haben :

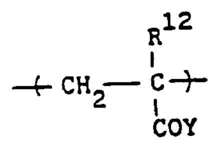

worin Y eine Gruppe —OH, —$NHR^4$ oder —$OR^{13}$ darstellt, worin $R^{13}$ für eine Alkylgruppe mit 4 bis 24 Kohlenstoffatomen und $R^4$ für eine Alkylgruppe mit 4 bis 24 Kohlenstoffatomen stehen ; und $R^{12}$ ein Wasserstoffatom oder eine Methylgruppe darstellt.

3. Copolymer nach Anspruch 1 oder 2, dadurch gekennzeichnet, daß die Einheiten (A) von einem linearen α-Olefin mit 12 bis 28 Kohlenstoffatomen abgeleitet sind, daß die Einheiten (B) von Maleinsäureanhydrid und N-substituierten Maleimiden abgeleitet sind, daß die Einheiten (C) von ungesättigten 1,2-Diolestern abgeleitet sind und mindestens einer der Formeln entsprechen :

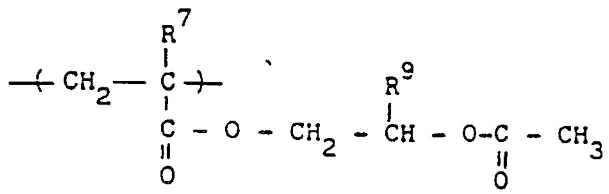

und

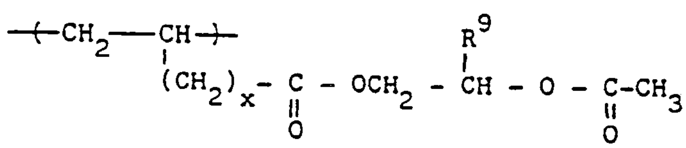

worin $R^7$ ein Wasserstoffatom oder eine Methylgruppe ; $R^9$ einen monovalenten gesättigten linearen aliphatischen Rest mit 10 bis 26 Kohlenstoffatomen ; und x eine ganze Zahl von 6 bis 21 darstellen,

und daß die Einheiten (D) von Acrylverbindungen abgeleitet sind und der Formel entsprechen :

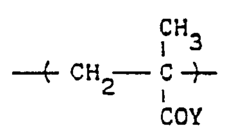

worin Y eine Gruppe —OH, —$NHR^4$ oder —$OR^{13}$ darstellt, worin $R^{13}$ für eine Alkylgruppe mit 12 bis 22 Kohlenstoffatomen und $R^4$ für eine Alkylgruppe mit 10 bis 24 Kohlenstoffatomen stehen.

4. Copolymer nach einem der Ansprüche 1 bis 3, dadurch gekennzeichnet, daß die Einheiten (B) abgeleitet sind von Maleinsäureanhydrid oder N-substituierten Maleimiden, deren Substituent aus einer Verbindung mit einer primären Aminfunktion stammt, die eine der folgenden allgemeinen Formeln hat :

$R-NH_2$, worin R einen linearen Alkylrest mit 10 bis 24 Kohlenstoffatomen darstellt ;

$$R - NR^{15} - [(CH_2)_n - NH]_m - H \quad ,$$

worin R einen linearen Alkylrest mit 8 bis 24 Kohlenstoffatomen ; $R^{15}$ ein Wasserstoffatom oder einen linearen Alkylrest mit 1 bis 24 Kohlenstoffatomen, wobei R und $R^{15}$ gemeinsam 9 bis 32 Kohlenstoffatome enthalten ; n eine ganze Zahl von 2 bis 4 und m eine ganze Zahl von 1 bis 4 darstellen ;

$$R - O[(CH_2)_n - NH]_m - H \quad ,$$

worin R einen linearen Alkylrest mit 8 bis 24 Kohlenstoffatomen ; n eine ganze Zahl von 2 bis 4 ; und m eine ganze Zahl von 1 bis 4 darstellen ;

$HO-R^{14}-NH_2$, worin $R^{14}$ einen linearen oder verzweigten Alkylenrest mit 8 bis 24 Kohlenstoffatomen darstellt.

5. Copolymer nach einem der Ansprüche 1 bis 4, dadurch gekennzeichnet, daß es umfaßt
15 bis 55 Mol-% Einheiten (A),
10 bis 60 Mol-% Einheiten (B),
10 bis 50 Mol-% Einheiten (C) und Einheiten (D) in einem Prozentsatz, der niedriger oder gleich demjenigen der Einheiten (C) ist, wobei die Summe der Prozentsätze der Einheiten (A), (B), (C) und (D), die es enthält, 100 Mol-% beträgt.

6. Copolymer nach einem der Ansprüche 1 bis 5, dadurch gekennzeichnet, daß es keine Einheiten (D) enthält, wobei die Summe der Prozentsätze der Einheiten (A), (B) und (C), die es enthält, 100 Mol-% beträgt.

7. Verfahren zur Herstellung eines Copolymers nach einem der Ansprüche 1 bis 6, dadurch gekennzeichnet, daß es die folgenden Stufen umfaßt :

(a) die Umsetzung einer ungesättigten Säure mit einem endständigen Monoepoxid unter Bildung eines Alkoholesters der ungesättigten Säure ;
(b) die eventuelle Umsetzung des in der Stufe (a) erhaltenen Alkoholesters der ungesättigten Säure mit einem Reagens, das die Umwandlung der Hydroxylgruppen mindestens zum Teil in Alkoxy- oder Acylgruppen erlaubt ;
(c) die radikalische Copolymerisation einer Mischung, enthaltend mindestens ein α-Olefin, mindestens ein Dicarbonsäureanhydrid, mindestens eine Verbindung, wie sie in der Stufe (a) oder in der Stufe (b) oben erhalten worden ist, und gegebenenfalls mindestens einen Acrylester ; und
(d) die Kondensation mindestens einer Verbindung mit einer primären Aminfunktion an das in der Stufe (c) erhaltene Copolymere unter Bedingungen, welche die Umwandlung mindestens eines Teils der Anhydridgruppen des in der Stufe (c) erhaltenen Copolymers in substituierte N-Imidgruppen erlaubt.

8. Verfahren zur Herstellung eines Copolymers nach einem der Ansprüche 1 bis 6, dadurch gekennzeichnet, daß es die folgenden Stufen umfabt :

(a) die radikalische Copolymerisation einer Mischung aus mindestens einem α-Olefin, mindestens einem Dicarbonsäureanhydrid, Acrylsäure und gegebenenfalls mindestens einem Acrylester ;
(b) die Umsetzung des in der Stufe (a) erhaltenen Copolymers mit einer Verbindung mit einer primären Aminfunktion unter Bedingungen, welche die Umwandlung mindestens eines Teils der Anhydridgruppen des in der Stufe (a) erhaltenen Copolymers in N-substituierte Imidgruppen erlauben ;
(c) die Umsetzung des in der Stufe (b) erhaltenen Produkts mit mindestens einem endständigen Monoepoxid, um die Einheiten, die von Acrylsäure abgeleitet sind, die in der Stufe (b) erhaltenen Produkt enthalten ist, mindestens zu einem größeren Anteil in Einheiten mit einer Alkoholesterstruktur umzuwandeln ; und
(d) die eventuelle Umsetzung des in der Stufe (c) erhaltenen Produkts mit einem Reagens, das die Umwandlung mindestens eines Teils der Hydroxylgruppen in Alkoxygruppen oder Acylgruppen erlaubt.

9. Mitteldestillat-Zusammensetzung, dadurch gekennzeichnet, daß sie enthält einen größeren Mengenanteil an Mitteldestillat mit einem Destillationsintervall zwischen 150 und 450°C und einem kleineren Mengenanteil, der für die Herabsetzung des Fliebpunktes ausreicht, mindestens eines Copolymers nach einem der Ansprüche 1 bis 6.

10. Mitteldestillat-Zusammensetzung nach Anspruch 9, dadurch gekennzeichnet, daß das Mitteldestillat besteht aus einer Gasölfraktion mit einem Destillationsintervall, das geht von einer Anfangstemperatur von 160 bis 190°C bis zu einer Endtemperatur von 360 bis 430°C.

11. Mitteldestillat-Zusammensetzung nach Anspruch 9 oder 10, dadurch gekennzeichnet, daß der Mengenanteil des Copolymers 0,001 bis 2 Gew.-% beträgt.

12. Mitteldestillat-Zusammensetzung nach Anspruch 11, dadurch gekennzeichnet, daß der Mengenanteil des Copolymers 0,01 bis 1 Gew.-% beträgt.

## Claims

1. A copolymer of average number molecular weight of about 400 to 50,000 comprising :

a) 5-60% by mole of recurrent units (A) derived from alpha olefins of 2-36 carbon atoms complying with the general formula :

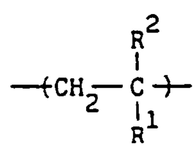

wherein $R^1$ is a hydrogen atom or a lower alkyl group of 1-4 carbon atoms and $R^2$ is a hydrogen atom or an alkyl group of 1-30 carbon atoms,

b) 10-70% by mole of recurrent units (B) derived from unsaturated dicarboxylic compounds complying with one of the general formulas :

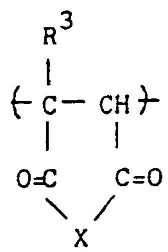 or 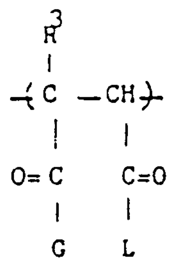 or 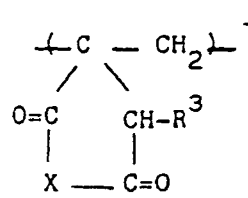 or 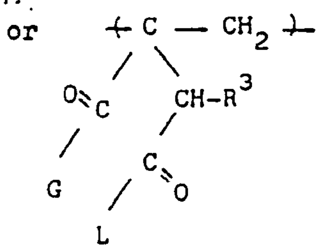

or 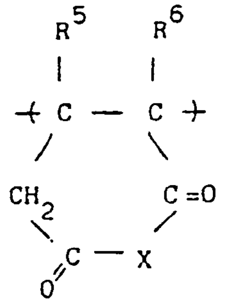 or 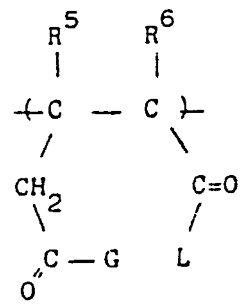

wherein $R^3$ is a hydrogen atom or a lower alkyl group of 1-4 carbon atoms ; X is an oxygen atom or an $=N-R^4$ group in which $R^4$ is a monovalent organic radical derived from a compound containing a primary amine group complying with one of the general formulas :

$$R - Z - [-(CH_2)_n - NH]_m - H \quad \text{or} \quad HO - R^{14} - NH_2$$

wherein R is a monovalent aliphatic radical of 1-30 carbon atoms, Z is selected from the oxygen atom —O— and —$NR^{15}$— groups wherein $R^{15}$ is a hydrogen atom or a monovalent aliphatic radical of 1-30 carbon atoms, n is an integer from 2 to 4 ; m is zero when Z is —NH— or an integer from 1 to 4 in all cases ; $R^{14}$ is a divalent aliphatic radical of 2-30 carbon atoms ;each of G an L, identical or different, is an —OH, —$OR^1$ or —$NHR^4$ group, in which $R^1$ and $R^4$ are defined as precedingly ; and each of $R^5$ and $R^6$, identical or different, is a hydrogen atom or a lower alkyl group of 1-4 carbon atoms, at least one of them being a hydrogen atom,

c) 10-60% by mole of recurrent units (C) derived from unsaturated esters of 1,2-diols, complying with the general formula :

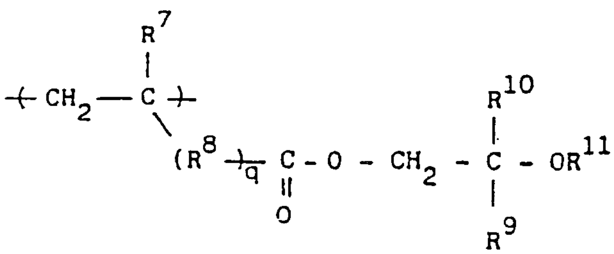

wherein each of $R^7$ and $R^{10}$, identical or different, is a hydrogen atom or a lower alkyl group of 1-34 carbon atoms ; $R^8$ is a divalent aliphatic radical of 1-30 carbon atoms ; q is zero or 1 ; $R^9$ is a monovalent aliphatic radical of 2-30 carbon atoms ; and $R^{11}$ is a hydrogen atom, a lower alkyl group of 1-4 carbon atoms or a lower acyl radical of 1-4 carbon atoms ; and

d) 0-60% by mole of recurrent units (D) derived from acrylic compounds complying with the general formula:

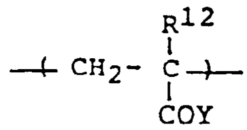

wherein $R^{12}$ is a hydrogen atom or a lower alkyl radical of 1-4 carbon atoms ; Y is an —OH, —$NHR^4$ or —$OR^{13}$ group wherein $R^4$ is defined as above and $R^{13}$ is an alkyl radical of 1-30 carbon atoms ; at least one of the recurrent units (A), (B), (C) and/or (D) of said copolymer containing at least 12 carbon atoms, and at least 10% of the recurrent units of said copolymer being recurrent units (B) of imide type, conforming with the above general formulas wherein X is an $= N\text{-}R^4$ group.

2. A copolymer according to claim 1, characterized in that recurrent units (A) are derived from a linear alpha olefin of 2-30 carbon atoms, recurrent units(B) are derived from unsaturated dicarboxylic compounds selected from the group formed of anhydrides and N-substituted imides derived from maleic acid, methylmaleic acid, itaconic acid and glutaconic acid, recurrent units (C) are derived from unsaturated esters of 1,2-diols and comply with at least one of the general formulas :

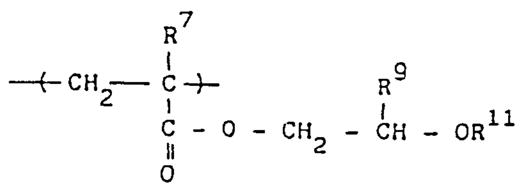

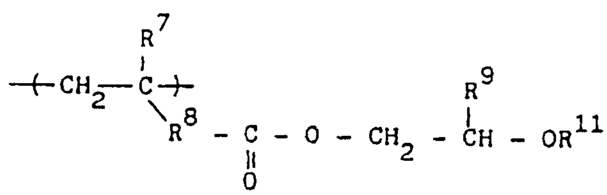

wherein $R^7$ is a hydrogen atom or a methyl group ; $R^8$ is a saturated divalent aliphatic radical of 6-24 carbon atoms ; $R^9$ is a monovalent saturated aliphatic hydrocarbon of 6-28 carbon atoms ; and $R^{11}$ is a hydrogen atom or an acetyl group, and recurrent units (D) are derived from acrylic compounds and conform with the formula:

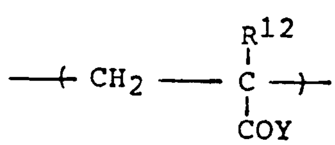

wherein Y is an —OH, —$NHR^4$ or —$OR^{13}$ group wherein $R^{13}$ is an alkyl group of 4-24 carbon atoms ; $R^4$ an alkyl group of 4-24 carbon atoms, and $R^{12}$ a hydrogen atom or a methyl group.

3. A copolymer according to claim 1, characterized in that recurrent units(A) are derived from a linear alpha olefin of 12-28 carbon atoms, recurrent units (B) are derived from maleic anhydride and N- substituted maleimides, recurrent units (C) are derivedfrom unsaturated esters of 1,2-diols and comply with at least one of the formulas :

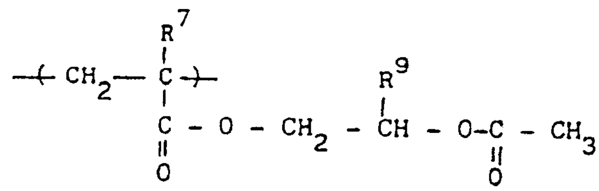

and

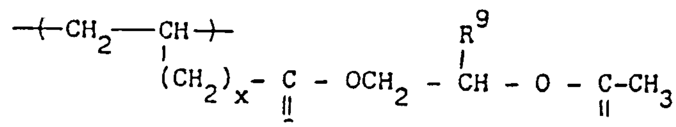

wherein $R^7$ is a hydrogen atom or a methyl group, $R^9$ is a monovalent linear saturated aliphatic radical of 10-26 carbon atoms ; and x is an integer from 6 to 21, and recurrent units (D) are derived from acrylic compounds and comply with the formula :

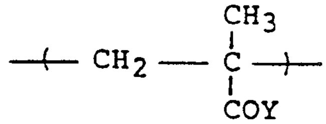

wherein Y is an —OH, —$NHR^4$ or —$OR^{13}$ group, in which $R^{13}$ is an alkyl group of 12-22 carbon atoms-and $R^4$ an alkyl group of 10-24 carbon atoms.

4. A copolymer according to one of claims 1 to 3, characterized in that recurrent units (B) are derived from maleic anhydride or from N-substituted maleimides whose substituent originates from a compound with primary amine group complying with one of the general formulas :

$R\text{-}NH_2$ wherein R is a linear alkyl radical of 10-24 carbon atoms ;

$$R\text{-}NR^{15}\text{—}\left[(CH_2)_n\text{—}NH\right]_m\text{—}$$

H wherein R is a linear alkyl radical of 8-24 carbon atoms ; $R^{15}$ is a hydrogen atom or a linear alkyl radical of 1-24 carbon atoms ; R and $R^{15}$ having together 9-32 carbon atoms ; n is an integer from 2 to 4 ; and m an integer from 1 to 4 ;

$$R - O\text{—}\left[(CH_2)_n\text{—}NH\right]_m\text{—}H$$

wherein R is a linear alkyl radical of 8-24 carbon atoms ; n is an integer from 2 to 4 ; and m an integer from 1 to 4 ;

HO — $R^{14}$ — $NH_2$ wherein $R^{14}$ is a linear or branched alkylene radical of 8-24 carbon atoms.

5. A copolymer according to claim 1, characterized by a proportion by mole of 15-55% of recurrent units (A), 10-60% of recurrent units (B), 10-50% of recurrent units (C) and a proportion of recurrent units (D) at most equal to that of recurrent units (C), the sum of percentages by mole of recurrent units (A), (B), (C)and (D) contained therein being equal to 100%.

6. A copolymer according to one of claims 1 to 5, characterized in that it does not contain recurrent units (D), the sum of the percentages by mole of recurrent units (A), (B) and (C) being equal to 100%.

7. A process for preparing a copolymer according to claim 1, characterized by comprising the following steps of :

a) reacting an unsaturated acid with an ending monoepoxide so as to form an ester-alcohol of said unsaturated acid ;

b) optionally reacting the ester-alcohol of unsaturated acid obtained in step (a) with a reactant adapted to convert at least partly the hydroxyl groups to alkoxy or acyl groups ;

c) copolymerizing, by a radical process,a mixture comprising at least one alpha olefin, at least one compound as obtained in step (a) or step (b) above and optionally at least one acrylic ester ; and

d) condensing at least one compound with primary amine group with the copolymer obtained in step (c) under such conditions as to convert at least partly the anhydride groups of the copolymer obtained in step (c) to N-substituted imide groups.

8. A process for preparing a copolymer according to one of claims 1 to 6, characterized by comprising the following steps of :

a) copolymerizing, by a radical process, a mixture of at least one alpha olefin, at least one anhydride of dicarboxylic acid, of acrylic acid and optionally of at least one acrylic ester ;

b) reacting the copolymer obtained in step (a) with a compound having a primary amine group, under such conditions as to convert at least partly the anhydride groups of the copolymer obtained in step (a) to N-substituted imide groups ;

c) reacting the product obtained in step (b) with at least one ending monoepoxide, so as to convert, at least in major part, the recurrent units originating from the acrylic acid contained in the product obtained in step (b) to recurrent units of ester-alcohol structure ; and

d) optionally reacting the product obtained in step (c) with a reactant adapted to convert at least partly the hydroxyl groups to alkoxy or acyl groups.

9. A middle distillate composition characterized in that it comprises a major proportion of a middle distillate having a distillation range from 150 to 450°C and a minor proportion, sufficient to lower its pour point, of at least one copolymer according to one of claims 1 to 6.

10. A middle distillate composition according to claim 9, characterized in that said middle distillate consists of a gas-oil cut having a distillation range from an initial temperature of 160-190°C to a final temperature of 360-430°C.

11. A middle distillate composition according to claim 9 or 10 characterized by a proportion of said copolymer from 0.001 to 2% by weight.

12. A middle distillate composition according to claim 11, characterized by a proportion of said copolymer from 0.01 to 1% by weight.